# EUROPÄISCHE PATENTSCHRIFT

(11) **EP 1 984 106 B1**
(45) Veröffentlichungstag und Bekanntmachung des Hinweises auf die Patenterteilung: **12.08.2009**
(21) Anmeldenummer: 08707453.0
(22) Anmeldetag: 31.01.2008
(51) Int. Cl.: B01F 17/00, C08G 18/28, C08G 18/58, C08G 18/64, C08G 59/00, C08G 59/06, C08G 59/18, C08G 59/40

(54) **UNIVERSELLE NETZ- UND DISPERGIERMITTEL AUF DER BASIS VON ISOCYANAT-MONOADDUKTEN**
UNIVERSAL WETTING AGENTS AND DISPERSANTS BASED ON ISOCYANATE MONOADDUCTS
AGENT RÉTICULANT ET DISPERSANT UNIVERSEL À BASE DE MONOADDUITS D'ISOCYANATE

(30) Priorität: 31.01.2007 DE 102007005720
(43) Veröffentlichungstag der Anmeldung: 29.10.2008
(73) Patentinhaber: BYK-Chemie GmbH, 46483 Wesel (DE)
(72) Erfinder: ORTH, Ulrich, 46485 Wesel (DE); OMEIS, Jürgen, 46286 Dorsten-Lembeck (DE); HOLTKAMP, Heribert, 46487 Wesel (DE); PICKAVÉ, Matthias, 45478 Mülheim/Ruhr (DE)
(74) Vertreter: Leifert & Steffan
(86) Internationale Anmeldenummer: PCT/EP2008/000765
(87) Internationale Veröffentlichungsnummer: WO 2008/092687

(56) Entgegenhaltungen:
- EP-A- 1 650 246
- DE-A1- 3 623 297

## Beschreibung

Die Erfindung betrifft Umsetzungsprodukte von Epoxiden mit Aminen und Polyalkylenoxid-modifizierten und/oder Polyester modifizierten und/oder Polyetherpolyester-modifizierten Isocyanaten zu aminischen Polymeren sowie deren Salze als Netz- und Dispergiermittel für Pigmente und Füllstoffe sowie ein Verfahren zu ihrer Herstellung. Die entstehenden Polymere sind kammartig. Die Erfindung betrifft weiterhin die Verwendung dieser Umsetzungsprodukte als Netz- und Dispergiermittel für organische und anorganische Pigmente, sowie Füllstoffe in wässrigen und lösemittelbasierten Systemen.

Die vorgenannten Umsetzungsprodukte sind insbesondere zur Herstellung von Pigmentkonzentraten sowie zur Stabilisierung von Feststoffen in Bindemitteln, Lacken, Kunststoffen und Kunststoffmischungen geeignet. Als Netz- und Dispergiermittel reduzieren sie die Viskosität solcher Systeme, verbessern die Lagerstabilität und die Fließeigenschaften und können die Farbstärke erhöhen.

Es sind hohe mechanische Kräfte erforderlich, um Feststoffe in flüssige Medien stabil einzubringen. Es ist daher üblich, Mittel einzusetzen, um diese Dispergierkräfte zu erniedrigen und damit sowohl den notwendigen Gesamtenergieeintrag in das System als auch die Dispergierzeit gering zu halten. Bei den bekannten Dispergiermitteln handelt es sich meist um oberflächenaktive Substanzen, die in kleiner Menge entweder direkt auf den Feststoff aufgebracht oder dem flüssigen Medium zugesetzt werden. Auch nach vollständiger Deflockulierung der Feststoffagglomerate kann es nach dem Dispergierprozess zu Reagglomeriationen kommen, wodurch der Dispergieraufwand teilweise oder vollständig zunichte gemacht wird. Auf diese Weise können unerwünschte Effekte wie ein Viskositätsanstieg in den flüssigen Systemen, Farbtondrift oder ein Glanzverlust in Lacken und Beschichtungen zustande kommen.

Es ist eine Vielzahl von verschiedenen Substanzen bekannt, die heute Verwendung als Dispergiermittel für Pigment und Füllstoffe findet. Ein Überblick über vorhandene Patentliteratur findet sich in EP 0 318 999 A. Beispielsweise werden neben einfachen niedermolekularen Verbindungen wie Lecithin, Fettsäuren und deren Salze sowie Alkyphenolethoxylaten auch komplexe Strukturen als Netz- und Dispergiermittel eingesetzt.

Eine bekannte Gruppe solcher Dispergiermittel basiert auf Umsetzungsprodukten von Mono- oder Polyepoxiden mit Aminen, die eine Imidazolin-Gruppierung enthalten. Eine Übersicht über diese Gruppe von Dispergiermitteln findet sich unter anderem in den US-Patentschriften 5 128 393 und US 4 710 561. Eine weitere Gruppe von Dispergiermitteln wird gebildet aus Polyepoxid/Amin-Mischungen und deren Salzen. Aus den Druckschriften DE 36 23 296 A und DE 36 23 297 A ist die Verwendung solcher Mischungen als Dispergiermittel für Pigmente vornehmlich in organischen Medien bekannt, wobei es sich bei den Polyepoxiden um Novolake handelt und als Amine aliphatische, aromatische und/oder heterocyclische Amine mit niedrigem Molekulargewicht eingesetzt werden.

In jüngster Zeit hat es weitere Entwicklungen auf dem Gebiet der Polyepoxid/Amin-Dispergiermittel gegeben. In der EP 747 413 A werden als Emulgatoren Umsetzungsprodukte aus aliphatischen Polyolen mit Epoxiden mit mindestens zwei Epoxidgruppen pro Ring beschrieben. Diese Verbindungen tragen demnach keine versalzbaren Stickstoffatome und zeigen daher nur geringe Affinität zu Füllstoffen und Pigmenten. Demgegenüber beschreibt die DE 103 26 147 A1 als Netz- und Dispergiermittel geeignete Additionsverbindungen von mono- oder polyfunktionellen, aromatischen Epoxiden mit Polyoxyalkylenmonoaminen. Diese speziellen Amine weisen mindestens vier Ether-Sauerstoffe pro Molekül auf. Eine weitere Anwendung der speziellen polyethersubstituierten Amine wird in der WO 2005/113677 A1 offenbart. Hier dienen die Amine als Emulgatoren zur Herstellung einer großen Bandbreite von Tinten mit hohem Pigmentanteil.

D2 (EP-A-1 650 246) offenbart im Beispiel 35 ein Netz- und Dispergiermittel für Pigmente, das durch die Reaktion aus einem Epoxy-Amin-Addukt mit Stearylisocyanat hergestellt wird.

Allen vorgenannten Dispergiermitteln ist gemeinsam, dass sie jeweils für ein eng begrenztes Einsatzgebiet entwickelt wurden und daher speziell auf die Pigment-Bindemittel-Mischung abgestellt sind. In Systemen mit stark unterschiedlicher Polarität sind sie jedoch nur bedingt einsetzbar.

Ein weiterer Nachteil der Dispergiermittel, die auf polyethersubstituierten Aminen basieren, besteht in der begrenzten Verfügbarkeit der Amine. Derzeit werden beispielsweise nur ca. fünf verschiedene Amine angeboten. Polyether-polyestermodifizierte primäre Amine sind hingegen gar nicht verfügbar.

Gerade im Hinblick auf großindustrielle Anwendungen stellt die geringe Bandbreite und Verfügbarkeit der bisher bekannten Netz- und Dispergiermittel ein Hindernis dar, weil im Zuge der rationalisierten Prozessabläufe bevorzugt modulare Komponenten eingesetzt werden. Diese modularen Komponenten sollen im Sinne eines Baukastensystems gut mit den anderen Komponenten wie Bindemitteln, Hilfsstoffen und Lösemitteln verträglich sein.

Es ist daher Aufgabe der vorliegenden Erfindung ein Netz- und Dispergiermittel bereitzustellen, das eine gute Verträglichkeit mit gängigen Bindemittel- und Lösemittelsystemen aufweist. Gleichzeitig soll eine leichte Verfügbarkeit des Netz-und Dispergiermittels sowie eine gute Langzeit- und Lagerstabilität gegeben sein. Daneben soll ein Verfahren zur Herstellung solcher Netz- und Dispergiermittel angegeben werden.

Die Aufgabe wird erfindungsgemäß gelöst durch eine als Netz- und Dispergiermittel geeignete Additionsverbindung, erhältlich aus der Umsetzung von
A) Polyepoxiden mit
B) mindestens einem aliphatischen und/oder araliphatischen primären Aminen der allgemeinen Formel

   H₂N-R I

   wobei R = Alkyl, Cycloalkyl, Aryl oder Aralkyl bedeutet und wobei das primäre Amin noch weitere funktionelle Gruppen ausgewählt aus -OH, tertiäres Amin oder Carboxyl tragen kann und nachfolgende Addition
C) mindestens eines modifizierten Isocyanats der allgemeinen Formel IIa und/oder IIb 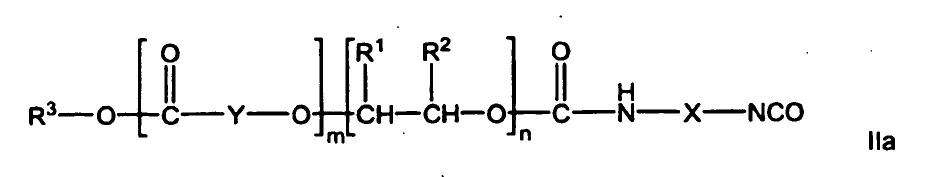 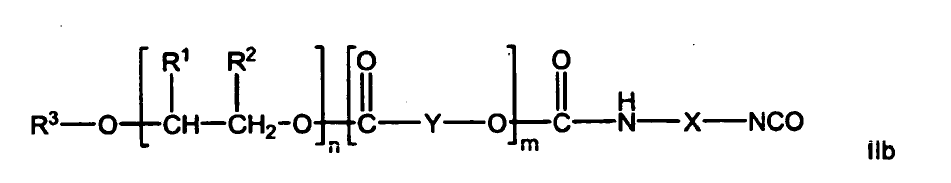
wobei R³ = Alkyl, Cycloalkyl, Aryl oder Aralkyl ist, R¹ und R² unabhängig voneinander H, Alkyl und/oder Aryl sind, X = Alkylen, Cycloalkylen und/oder Aralkylen, Y = Alkylen und/oder Cycloalkylen und n und m unabhängig voneinander sind, wobei die Summe n+m ≥ 2 ist, unter Bildung eines Urethans.

Durch den Einsatz der polyether-, polyester- und/oder polyether-polyestermodifizierten Isocyanate weisen die erfindungsgemäßen Additionsverbindungen eine breite Verfügbarkeit auf. Die zusätzlich in den erfindungsgemäßen Verbindungen vorhandene Urethanbindung ermöglicht sowohl eine breite Verträglichkeit mit gängigen Bindemittel-Lösemittelsystemen als auch eine vorteilhafte Langzeit- und Lagerstabilität aufgrund ihrer chemischen Inertheit.

Als Komponente A können aromatenhaltige und/oder aliphatische Polyepoxide eingesetzt werden. Die Polyepoxide können zwei oder mehr Epoxygruppen pro Molekül enthalten und weisen mindestens sechs Kohlenstoffatome auf. Es können auch Gemische von verschiedenen Polyepoxiden eingesetzt werden. Typische Beispiele aus der Gruppe der aromatenhaltigen Polyepoxide sind Umsetzungsprodukte von Diphenylolpropan (Bisphenol A) mit Epichlorhydrin und deren höhere Homologe, die beispielsweise unter den Markenbezeichnungen D.E.R. oder Epikote von der DOW Chemical Company bzw. von Resolution Performance Products angeboten werden. Beispiele für aliphatische Polyepoxide sind 1.6-Hexandiglycidylether und 1.4-Butandiglycidylether. Die aliphatischen Polyepoxide können auch zusätzlich Sauerstoff in der Kette enthalten, wie z.B. Polypropylenglykoldiglycidylether und Polytetrahydrofurandiglycidylether. Diese aliphatischen Polyepoxide sind z.B. unter der Handelsbezeichnung Grilonit^{®} der Fa. Ems-Chemie erhältlich.

Die aliphatischen und/oder araliphatischen Amine der Komponente B weisen bevorzugt 3 bis 28 Kohlenstoffatome auf. Als zusätzliche funktionelle Gruppen sind Hydroxylgruppen oder tertiäre Aminogruppen besonders bevorzugt. Geeignete Amine mit einer zusätzlichen funktionellen Gruppe sind beispielsweise Ethanolamin, Butanolamin, 2-Amino-2-methyl-1-propanol. Geeignete Amine mit mehr als einer zusätzlichen funktionellen Gruppe sind beispielsweise 2-Amino-2-ethyl-1,3-propandiol oder 2-Amino-2-hydroxymethyl-1,3-propandiol. Insbesondere bevorzugt sind beispielsweise Ethanolamin, Butanolamin und/oder Dimethylaminopropylamin. Erfindungsgemäß weisen die Amine der Komponente B bevorzugt keine Alkoxyfunktionen als zusätzliche funktionelle Gruppen auf.

Vorzugsweise sind die modifizierten Isocyanate C Polyalkylenoxid-modizifierte Isocyanate der Formel IIc 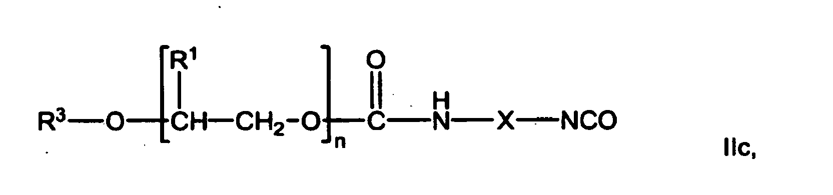 wobei R³ = Alkyl, Cycloalkyl, Aryl oder Aralkyl ist, R¹ = H, Methyl und/oder Ethyl ist, X = Alkylen, Cycloalkylen und/oder Aralkylen und n= 1 bis 100 ist. Besonders bevorzugt sind Polyalkylenoxid-modifizierte Isocyanate IIc mit n = 2 bis 100.

In einer bevorzugten Ausführungsform der vorliegenden Erfindung wird mindestens ein weiteres primäres Amin D der allgemeinen Formel III

H₂N-R'-Z III

eingesetzt, wobei R' = Alkylen bedeutet und Z ein heterocyclischer Rest ist. Die Amine der Komponente D sind bevorzugt heterocylische Verbindungen mit 5- oder 6-gliedrigen Ringen, die als Heteroatome bevorzugt N und/oder O enthalten wie z.B. N-(3-Aminopropyl)-imidazol oder oder N-(2-Aminoethyl)-morpholin.

Erfindungsgemäß können die Komponenten A und B bzw. A, B und D miteinander in einem stöchiometrischen Überschuß der Komponente A unter Bildung von epoxidterminierten Polymeren umgesetzt werden.
Gleichermaßen erfindungsgemäß können die Komponenten A und B bzw. A, B und D miteinander in einem stöchiometrischen Überschuß der Komponenten B und/oder D unter Bildung von aminterminierten Polymeren umgesetzt werden.

In einer weiteren bevorzugten Ausführungsform der vorliegenden Erfindung wird Komponente C in einer Menge eingesetzt, das 5-100%, bevorzugt 20-100% und besonders bevorzugt 40-100% der durch die Addition der Komponenten A, B und D erzeugten OH-Gruppen unter Urethanbildung umgesetzt werden.

In einer bevorzugten Ausführungsform der vorliegenden Erfindung ist Komponente A Diepoxide der allgemeinen Formel IV 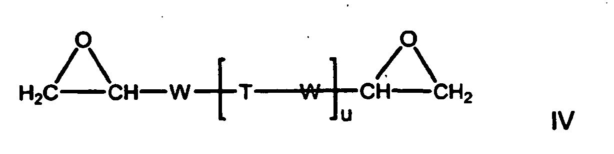 mit W =-CH₂-O-oder-CH₂-, T = Alkyl, Cycloalkyl, Aryl oder Aralkyl und u = 1-8.

Besonders bevorzugt werden als Komponente A aromatenhaltige Diepoxidverbindungen mit durchschnittlich zwei Epoxyfunktionen pro Molekül und insbesondere bevorzugt Diglycidylether von difunktionellen Phenolen eingesetzt. Die aromatenhaltigen Diepoxidverbindungen haben den Vorteil, dass sie eine höhere Bindemittel-Verträglichkeit aufweisen.

Besonders bevorzugt werden als Komponente A aliphatische oder cycloaliphatische Diepoxidverbindungen mit durchschnittlich zwei Epoxyfunktionen pro Molekül und insbesondere bevorzugt diglycidyletherhaltige Diepoxidverbindungen eingesetzt. Durch die niedrigere Eigenviskosität dieser aliphatischen und cycloaliphatischen Diepoxidverbindungen gegenüber den aromatenhaltigen und der damit verbundenen geringeren Viskosität des gebildeten Polymers sind höhermolekulare Strukturen möglich.

Die aus den Komponenten A, B und C bzw. A, B, C und D erhaltenen Additionsverbindungen stellen hochwertige und breit verträgliche Netz- und Dispergiermittel dar. Sie können in der Form, in der sie durch die zweistufige Reaktion erhalten werden, eingesetzt werden. Um ihre Eigenschaften im Einzelfall an spezifische Anforderungen anzupassen, ist es in manchen Fällen jedoch wünschenswert, sie weiter zu modifizieren. Im Folgenden werden geeignete Modifizierungen beschrieben, die auf eine Reaktion mit den in den Additionsverbindungen vorhandenen Hydroxyl- und/oder Aminogruppen basieren. Diese können bei der Modifikation vollständig oder teilweise umgesetzt werden.

Die folgenden Modifizierungsreaktionen können bei Bedarf kombiniert werden, so dass mehrfach modifizierte Additionsverbindungen erhalten werden. Sollten mehrere Modifizierungsreaktionen aufeinander folgend durchgeführt werden, ist darauf zu achten, genügend reaktive Gruppen für eine oder mehrere nachfolgende Umsetzungen im Molekül zu erhalten. Die genannten Modifizierungen sind vorteilhafte Ausgestaltungen der vorliegenden Erfindung und können realisiert werden durch:
1. Umsetzung der terminalen Aminogruppen mit Isocyanaten, Lactonen, cyclischen Carbonaten oder Acrylaten,
2. Umsetzung der terminalen Epoxidgruppe mit sekundären Aminen oder Säuren,
3. Umsetzung der verbliebenen Hydroxylfunktion mit Hydroxycarbonsäuren und/oder cyclischen Lactonen,
4. Umsetzung der verbliebenen Hydroxylfunktion mit anderen als den unter C aufgeführten Isocyanaten,
5. Umsetzung der verbliebenen Hydroxylfunktion mit Phosphorsäure oder Polyphosphorsäure und/oder sauren Phosphorsäureestem und/oder Carbonsäuren, und
6. Alkylierung oder Oxidation der Aminogruppe unter Ausbildung von quaternären Ammoniumsalzen oder Stickstoffoxiden.

Die gegebenenfalls in den erfindungsgemäßen Additionsverbindungen verbliebenen freien Hydroxylgruppen können wie unter 3.) angeführt verestert werden. Die Veresterung erfolgt in einer dem Fachmann bekannten Weise. Wenn in dem erfindungsgemäßen Additionsprodukt zusätzlich freie Aminogruppen vorhanden sind, empfiehlt es sich, diese vor der Veresterung zu versalzen, um eine befriedigende Reaktionsgeschwindigkeit zu erzielen. Bei dieser Umesterung bleiben endständige OH-Gruppen erhalten, wodurch sich die resultierenden Produkte durch eine besonders breite Verträglichkeit in vielen Lacksystemen auszeichnen.

Die bei der erfindungsgemäßen Addition entstandenen Verbindungen mit gegebenenfalls verbliebenen Hydroxylgruppen können weiterhin gemäß 4.) mit Isocyanaten umgesetzt werden. Die Urethanbildung wird in dem Fachmann bekannter Art durchgeführt. Die Umwandlung der Hydroxylgruppe in eine Urethangruppe wird bevorzugt vorgenommen, wenn Hydroxylgruppen im Lacksystem stören. Zudem kann sich die weitere Urethanbildung günstig auf die entschäumende Wirkung der Netz- und Dispergiermittel auswirken. Die Unterdrückung der Schaumneigung stellt vor allem bei Anreibungen in wässrigen Formulierungen eine wichtige zusätzliche Eigenschaft der Netz- und Dispergiermittel dar.

Die unter 6.) beschriebene Modifikation der gegebenenfalls verbliebenen Aminogruppen erfolgt in dem Fachmann bekannter Weise. Beispielsweise kann mit Alkyl- oder Aralkylhalogeniden, mit Halogencarbonsäureestern oder Epoxiden eine Quartemisierung des Aminostickstoffatoms erreicht werden. Eine solche Quartemisierung ist beispielsweise dann bevorzugt, wenn Aminogruppen in dem Bindemittelsystem stören, in welches die Pigmentpaste eingearbeitet wird.

Die Umsetzung der Epoxidfunktion der Komponente A mit den Aminogruppen der Komponenten B bzw. B und C unter Bildung der β-Hydroxyaminofunktion kann in einem Lösungsmittelsystem, bevorzugt aber in Substanz nach den dem Fachmann bekannten Verfahren durchgeführt werden. Die zu wählende Reaktionstemperatur hängt dabei von der Reaktivität der Edukte ab. Viele Epoxide reagieren mit Aminen bereits bei Raumtemperatur. Hingegen können für weniger reaktive Epoxide Reaktionstemperaturen bis 160°C nötig sein. Besonders geeignete Reaktionstemperaturen für die Umsetzung von Epoxiden mit Aminen liegen bei 50-120°C. Gegebenenfalls können dem Fachmann bekannte Katalysatoren verwendet werden, um die Umsetzung des Epoxids mit dem Amin zu beschleunigen.

Komponente C wird bevorzugt hergestellt nach den Verfahren, wie sie in der DE 199 19 482 A1 beschrieben sind. Dazu werden Monohydroxy-Verbindungen mit einem Überschuss an Diisocyanat, bevorzugt Toluylendiisocyanat, umgesetzt und der nicht umgesetzte Teil des Diisocyanats wird aus dem Reaktionsgemisch entfernt.

Die Aufgabe der vorliegenden Erfindung wird gleichermaßen gelöst durch ein Verfahren zur Herstellung einer als Netz- und Dispergiermittel geeigneten Additionsverbindung durch Umsetzung von

Verfahren zur Herstellung einer als Netz- und Dispergiermittel geeigneten Additionsverbindung durch Umsetzung von
A) Polyepoxiden mit
B) mindestens einem aliphatischen und/oder araliphatischen primären Aminen der allgemeinen Formel I

   H₂N-R I

   wobei R = Alkyl, Cycloalkyl, Aryl und Aralkyl bedeutet und wobei das primäre Amin noch weitere funktionelle Gruppen ausgewählt aus -OH, tertiäres Amin oder Carboxyl tragen kann und nachfolgende Addition
C) mindestens modifizierten Isocyanats der allgemeinen Formel IIa und/oder IIb 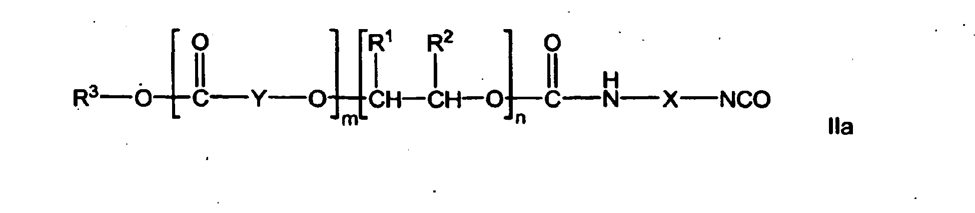 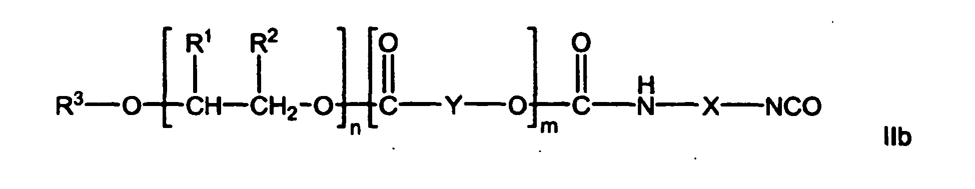
wobei R³ = Alkyl, Cycloalkyl, Aryl oder Aralkyl ist, R¹ und R² unabhängig voneinander H, Alkyl und/oder Aryl sind, X = Alkylen, Cycloalkylen und/oder Aralkylen, Y = Alkylen und/oder Cycloalkylen und n und m unabhängig voneinander sind, wobei die Summe n+m ≥ 2 ist, unter Bildung eines Urethans.

In einer bevorzugten Ausführungsform des erfindungsgemäßen Verfahrens werden Polyalkylenoxid-modfizierte Isocyanate der Formel IIc 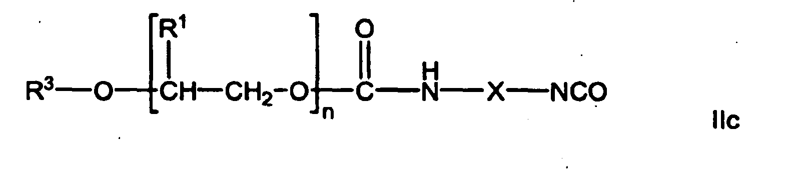 als Isocyanate C eingesetzt, wobei R³ = Alkyl, Cycloalkyl, Aryl und/oder Aralkyl ist, R¹ = H, Methyl und/oder Ethyl ist, X = Alkylen, Cycloalkylen und/oder Aralkylen und n= 1 bis 100 ist.

In einer weiteren bevorzugten Ausführungsform des erfindungsgemäßen Verfahrens wird ein weiteres primäres Amin D der allgemeinen Formel III

H₂N-R'-Z III

eingesetzt, wobei R' = Alkylen bedeutet und Z ein heterocyclischer Rest ist.

In einer bevorzugten Ausführungsform des erfindungsgemäßen Verfahrens werden als Komponente A) Diepoxide der allgemeinen Formel IV 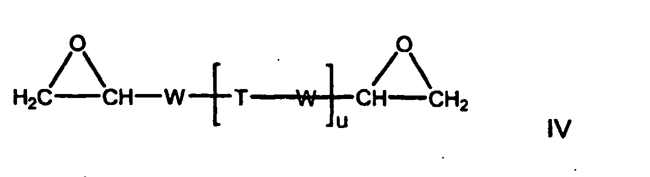 mit W = -CH₂-O- oder -CH₂-, T = Alkyl, Cycloalkyl, Aryl oder Aralkyl und u = 1-8 eingesetzt.

Die Komponenten A und B bzw. A und B+D können in einer weiteren Ausführungsform des erfindungsgemäßen Verfahrens bevorzugt in einem molaren Verhältnis von 2:3 bis 3:2 eingesetzt werden.

Im Hinblick auf den Einsatz der Komponente C wird die eingesetzte Menge dieser Komponente bevorzugt so gewählt, dass in der Additionsreaktion 5-100%, bevorzugt 20-100% und besonders bevorzugt 40-100%, der durch die Addition der Komponenten A und B bzw. A, B und D erzeugten OH-Gruppen unter Urethanbildung umgesetzt werden.

Auf diese Weise wird eine besonders gute Verträglichkeit der Additionsverbindung mit Bindemitteln gerade in wässrigen Systemen erzielt.

Die erfindungsgemäßen Additionsverbindungen werden als Netz- und/oder Dispergiermittel für organische und/oder anorganische Pigmente oder Füllstoffe verwendet. Die Dispergiermittel können alleine oder zusammen mit Bindemitteln eingesetzt werden. Besonders bevorzugt finden die erfindungsgemäßen Netz- und Dispergiermittel in wässrigen und/oder lösemittelhaltigen Lacken zur Stabilisierung und Dispergierung von Pigmenten und Füllstoffen ihre Anwendung.

Neben dem Einsatz als Netz- und Dispergiermittel in wässrigen und/oder lösemittelhaltigen Dispersionen, insbesondere Lacken, ist es ebenfalls möglich, pulver- oder faserförmige Feststoffe mit den erfindungsgemäßen Additionsverbindungen zu beschichten. Derartige Beschichtungen von organischen und anorganischen Feststoffen werden in bekannter Art und Weise durchgeführt, beispielsweise sind in der EP 0 270 126 A solche Verfahren beschrieben. Speziell bei Pigmenten kann eine Beschichtung der Pigmentoberfläche während oder nach der Synthese der Pigmente erfolgen, beispielsweise durch Zusatz der erfindungsgemäßen Additionsverbindungen zur Pigmentsuspension. Auf diese Weise vorbehandelte Pigmente zeigen eine leichte Einarbeitbarkeit in das Bindemittelsystem, ein verbessertes Viskositäts- und Flockulationsverhalten sowie einen guten Glanz gegenüber nicht behandelten Pigmenten. Des weiteren eignen sich die erfindungsgemäßen Additionsverbindungen zur Dispergierung von zB.
Effektpigmenten in Nagellacken.

Die erfindungsgemäßen Dispergiermittel werden bevorzugt in einer Menge von 0,5-60 Gew.-% bezogen auf den zu dispergierenden Feststoff eingesetzt. Bei speziellen Feststoffen können zur Dispergierung aber auch wesentlich höhere Mengen an Dispergiermittel notwendig sein.

Die eingesetzte Menge an Dispergiermittel ist im Wesentlichen abhängig von Größe und Art der Oberfläche des zu dispergierenden Feststoffs. Beispielsweise benötigt Ruß wesentlich größere Mengen an Dispergiermittel als Titandioxid. In der EP 0 270 126 A finden sich Beispiele für Pigmente und Füllstoffe. Weitere Beispiele basieren auf Neuentwicklungen insbesondere im Bereich der organischen Pigmente wie in der Klasse der Diketo-pyrrolo-pyrrole. Auch magnetische Pigmente auf Basis Reineisen oder Mischoxiden können mit Hilfe der erfindungsgemäßen Dispergiermittel in Dispersionen eingebracht werden. Des weiteren lassen sich auch mineralische Füllstoffe wie Calciumcarbonat und Calciumoxid oder Flammschutzmittel wie Aluminium- oder Magnesiumhydroxid dispergieren. Zudem werden auch Mattierungsmittel wie Kieselsäuren dispergiert und stabilisiert.

Die Erfindung wird durch die nachfolgenden Beispiele zusätzlich erläutert ohne durch diese beschränkt zu sein. Wenn nicht anders angegeben, handelt es sich bei der Angabe von Teilen um Gewichtsteile, bei der Angabe von Prozenten um Gewichtsprozente.

### Beispiele

### Beispiel 1

In einem 250 ml Vierhalskolben mit KPG-Rührer, Stickstoffleitung und Intensivkühler wurden 13,0 g Epikote 828 in 16 g Ethylacetat vorgelegt. Die klare Lösung wurde unter Rühren auf 75°C erwärmt. Innerhalb von 3 Minuten wurden 2,73 g Ethanolamin zugetropft. Die anfangs klare Lösung wurde nach 3 Stunden trüb. Nach insgesamt 5 Stunden Reaktionszeit wurden 34,8 g TDI-M 350 Monoaddukt zugetropft. Nach weiteren 3 Stunden Reaktionszeit bei 80°C wurde das Reaktionsprodukt mit 75,75 g VE-Wasser verdünnt. Das Ethylacetat wurde am Rotationsverdampfer bei 200 mbar und 60°C innerhalb von 2 Stunden entfernt. Das hergestellte Produkt ist eine gelbliche, klare Lösung mit 40 % Festkörper.

Die weiteren Beispiele wurden mit den in der unten angeführten Tabelle gezeigten Edukten nach der oben genannten Vorschrift durchgeführt.

| Bsp. | Epoxide [Molverhältnis] | Amin [Molverhältnis] | Molverhältnis [Epoxid:Amin] | Isocyanat-Addukt | Umgesetzte OH-Gruppen |
|---|---|---|---|---|---|
| 2 | Grilonit RV 1812 | Benzylamin | 9:10 | TDI-M2000 | 50 % |
| 3 | Epikote 828/ Grilonit RV 1806 [1:1] | Ethanolamin | 2:3 | TDI-M 350 | 50 % |
| 4 | Grilonit RV 1812 | Benzylamin | 3:4 | TDI-M2000 | 50 % |
| 5 | Grilonit RV 1812 | Benzylamin | 6:7 | TDI-M2000 | 50 % |
| 6 | Epikote 828 | Ethanolamin | 7:8 | TDI-M750 | 50 % |

TDI: Toluylendiisocyanat (Isomerengemisch)
M350: Methoxypolyethylenglykol (Mol.-Gew. 350)
M750: Methoxypolyethylenglykol (Mol.-Gew. 750)
M2000: Methoxypolyethylenglykol (Mol.-Gew. 2000)
Grilonit RV 1806: 1,4-Butane diglycidyl ether
Grilonit RV 1812: 1,6-Hexane diglycidyl ether
Epikote 828: Bisphenol A - Diglycidylether

Als Vergleichsbeispiel (nicht erfindungsgemäß) wurde Beispiel 1 der WO 2005/113677 der Fa. Huntsman herangezogen.

### Anwendungstests

Zur Prüfung der Wirksamkeit der erfindungsgemäßen Dispergiermittel wurden bindemittelfreie Pigmentpasten hergestellt, die in ein Bindemittel eingearbeitet wurden. Dabei wurden das Schaumverhalten und die Viskosität beurteilt. Nach Applikation und Aushärtung der fertigen Pigmentlacke wurden dann die Aufzüge visuell beurteilt und Transparenz, Farbstärke sowie Glanz- und Glanzschleier-(Haze)messungen vorgenommen.
Die Dispergierung der Komponenten der Formulierung erfolgt über 40 min. bei 40°C und 10.000 U/min mit Hilfe eines Dispermaten CV der Fa. VMA-Getzmann GmbH.

### Formulierung

| | |
|---|---|
| Wasser | 30,16 g |
| Byk 034: | 0,40 g |
| Irgalithrot FBN: | 36,00 g |
| Netz- und Dispergiermittel: | 13,50 g |
| Bindemittel Joncryl 8052: | 186,67 g |

| | |
|---|---|
| Byk 034: Entschäumer der Fa. Byk-Chemie GmbH Irgalithrot FBN: Naphtol-AS Pigment der Fa. Ciba Johncryl 8052: Acrylat-Dispersion der Fa. Johnson Polymers | |

### Beurteilung

| **Beispiel** | **Schaum** | **Transparenz** | **Glanz 20°** | **Glanz 60°** | **Farbstärke** | **Viskosität** |
|---|---|---|---|---|---|---|
| 1 | wenig Schaum | 1 | 56 | 87 | 2 | 1 |
| 2 | wenig Schaum | 1 | 55 | 86 | 1-2 | 1 |
| 3 | wenig Schaum | 1 | 57 | 87 | 1-2 | 2 |
| 4 | wenig Schaum | 1 | 55 | 85 | 1-2 | 2 |
| 5 | wenig Schaum | 1 | 57 | 86 | 1-2 | 2 |
| 6 | wenig Schaum | 1-2 | 45 | 81 | 1-2 | 1 |
| Vergl. Beispiel | schaumig | 2-3 | 41 | 80 | 4 | 2 |

### Beispiel 7

In einem 250 ml Vierhalskolben mit KPG-Rührer, Stickstoffleitung und Intensivkühler wurden 13,07 g Grilonit F713 in 69,3g Methoxypropylacetat vorgelegt. Die klare Lösung wurde unter Rühren auf 75°C erwärmt. Innerhalb von 3 Minuten wurden 1,93 g Benzylamin zugetropft [Molverhältnis 15:16]. Nach insgesamt 5 Stunden Reaktionszeit wurden 54,3 g eines TDI-Monoadduktes eines Decanolgestarteten-Caprolactonpolyesters (C16CAPA) zugetropft. Das hergestellte Produkt ist eine gelbliche, klare Lösung mit 50 % Festkörper.

Die weiteren Beispiele wurden mit den in der unten angeführten Tabelle gezeigten Edukten nach der oben genannten Vorschrift des Beispiels 7 durchgeführt.

| Bsp. | Epoxid(e) | Amin B | Amin D | Molverhältnis [Amin B:Amin D] | Molverhältnis [Epoxid:Aminen] | Isocyanat-Addukt |
|---|---|---|---|---|---|---|
| 8 | Grilonit F704 | Benzylamin | Aminopropylimidazol | 6:1 | 15:16 | TDI-M1500 |
| 9 | Grilonit F713 | Benzylamin | Aminopropylimidazol | 8:1 | 15:16 | TDI-M1500 |
| 10 | Grilonit RV 1812 | Benzylamin | Aminopropylimidazol | 6:1 | 15:16 | TDI-M2000 |
| 11 | Grilonit F704 | Benzylamin | Aminopropylimidazol | 4:1 | 15:16 | TDI-C16CAPA |
| 12 | Grilonit F713 | Benzylamin | Aminopropylimidazol | 4:1 | 15:16 | TDI-C16CAPA |

| | | | | | | |
|---|---|---|---|---|---|---|
| TDI: Toluylendiisocyanat (Isomerengemisch) M1500: Methoxypolyethylenglykol (Mol.-Gew. 1500) Grilonit F713: Polytetrahydrofuran-diglycidylether (9-THF-Einheiten) Grilonit F704: Polypropylenglykol-diglycidylether (7 PO-Einheiten) C16CAPA: Decanolgestarteter Caprolactonpolyester; C16:CAPA =1:5 | | | | | | |

Als Vergleichsbeispiel 2 (nicht erfindungsgemäß) wurde Beispiel 4 der DE 10326147 herangezogen.

### Anwendungstests

Zur Prüfung der Wirksamkeit der erfindungsgemäßen Dispergiermittel wurden zunächst Pigmentpasten (Millbase) hergestellt, die anschließend in ein Bindemittel eingearbeitet wurden (LetDown). Dabei wurde das Schaumverhalten und die Viskosität beurteilt. Nach Applikation und Aushärtung der fertigen Pigmentlacke wurden dann die Aufzüge visuell beurteilt und Transparenz sowie Glanz- und Glanzschleier- (Haze)messungen vorgenommen.
Die Dispergierung der Komponenten der Formulierung erfolgt über 40 min. bei 40°C und 10.000 U/min mit Hilfe eines Dispermaten CV der Fa. VMA-Getzmann GmbH.

### Formulierung

**Millbase**

| | |
|---|---|
| Macrynal SM 516 | 21,4 g |
| Methoxypropylacetat | 14 g |
| Heliogenblau 6975 F | 7,5 g |
| Netz- und Dispergiermittel | 6,5 g |
| Butylacetat | 0,6 g |

**LetDown**

| | |
|---|---|
| Millbase | 50 g |
| Methoxypropylacetat | 10 g |
| Macrynal SM 516 | 34,96 g |
| Butylglykolacetat | 0,5 g |
| Butylacetat | 3,49 g |
| DBTL (1% in Butylacetat) | 0,9 g |
| Byk-331 | 0,15 g |

| | |
|---|---|
| Byk 331: Verlaufsadditiv der Fa. Byk-Chemie GmbH Heliogenblau 6975 F: Phthalocyanin-Pigment der Fa. BASF Macrynal SM 516: Polyacrylat, 70%ig in Butylacetat der Fa. Clariant | |

### Beurteilung

| **Beispiel** | **Viskosität** | **Schaum** | **Transparenz** | **Glanz 20°** | **Haze** | **Farbstärke** |
|---|---|---|---|---|---|---|
| 7 | 2 | wenig Schaum | 1 | 91 | 25 | 2 |
| 8 | 2 | wenig Schaum | 1 | 90 | 30 | 1-2 |
| 9 | 2 | wenig Schaum | 1 | 90 | 28 | 1-2 |
| 10 | 2 | wenig Schaum | 1 | 91 | 28 | 1-2 |
| 11 | 2 | wenig Schaum | 1 | 91 | 25 | 1-2 |
| 12 | 2 | wenig Schaum | 1-2 | 90 | 27 | 1-2 |
| Vergl. Beispiel 2 | 3 | Leicht schaumig | 2-3 | 56 | 305 | 3 |

## Patentansprüche

1. Als Netz- und Dispergiermittel geeignete Additionsverbindung, erhältlich aus der Umsetzung von
A) Polyepoxiden mit
B) mindestens einem aliphatischen und/oder araliphatischen primären Aminen der allgemeinen Formel I
H₂N-R I
wobei R = Alkyl, Cycloalkyl, Aryl und Aralkyl bedeutet und wobei das primäre Amin noch weitere funktionelle Gruppen ausgewählt aus -OH, tertiäres Amin oder Carboxyl tragen kann und nachfolgende Addition
C) mindestens eines modifizierten Isocyanats der allgemeinen Formel IIa und/oder IIb 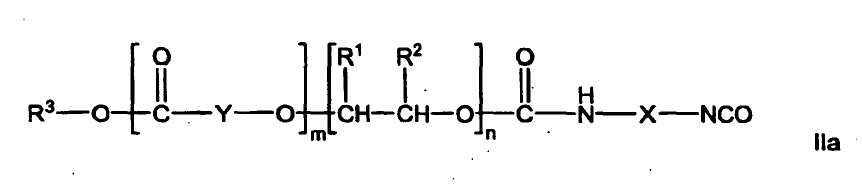 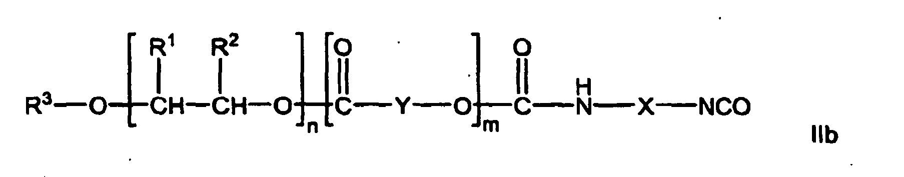
wobei R³ = Alkyl, Cycloalkyl, Aryl und/oder Aralkyl ist, R¹ und R² unabhängig voneinander H, Alkyl oder Aryl sind, X = Alkylen, Cycloalkylen und/oder Aralkylen, Y = Alkylen und/oder Cycloalkylen und n und m unabhängig voneinander sind, wobei die Summe n+m ≥ 2 ist, unter Bildung eines Urethans.

2. Additionsverbindung nach Anspruch 1, **dadurch gekennzeichnet, dass** das Isocyanat C ein Polyalkylenoxid-modifiziertes Isocyanat der Formel IIc 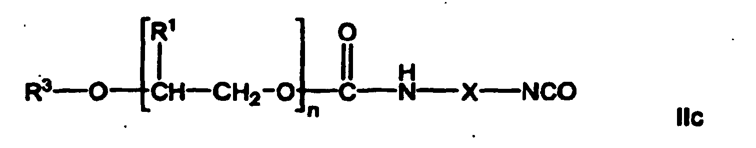 ist, wobei R³ = Alkyl, Cycloalkyl, Aryl oder Aralkyl ist, R¹ = H, Methyl und/oder Ethyl ist, X = Alkylen, Cycloalkylen und/oder Aralkylen und n = 2 bis 100 ist.

3. Additionsverbindung nach einem der vorstehenden Ansprüche, **dadurch gekennzeichnet, dass** mindestens ein weiteres primäres Amin D der allgemeinen Formel III
H₂N-R'-Z III
wobei R' = Alkylen bedeutet und Z ein heterocyclischer Rest ist, eingesetzt wird.

4. Additionsverbindung nach einem der vorhergehenden Ansprüche, **dadurch gekennzeichnet, dass** die Komponente A Diepoxide der allgemeinen Formel IV 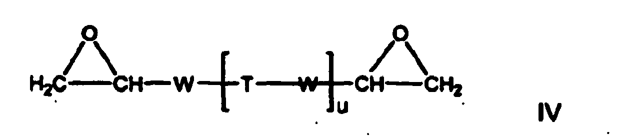 mit W = -CH₂-O- oder -CH₂-, T = Alkyl, Cycloalkyl, Aryl oder Aralkyl und u = 1-8 sind.

5. Additionsverbindung nach Anspruch 4, **dadurch gekennzeichnet, dass** die Diepoxide aromatenhaltige Diepoxidverbindungen mit durchschnittlich zwei Epoxyfunktionen pro Molekül sind.

6. Additionsverbindung nach Anspruch 5, **dadurch gekennzeichnet, dass** die Diepoxidverbindungen Diglycidylether von difunktionellen Phenolderivaten sind.

7. Additionsverbindung nach Anspruch 4, **dadurch gekennzeichnet, dass** die Diepoxide aliphatische und/oder cycloaliphatische Diepoxidverbindungen mit durchschnittlich zwei Epoxyfunktionen pro Molekül sind.

8. Additionsverbindung nach einem der vorhergehenden Ansprüche, **dadurch gekennzeichnet, dass** in einem weiteren Schritt gegebenenfalls vorhandene terminale Aminogruppen mit Isocyanaten, Lactonen, cyclischen Carbonaten oder Acrylaten umgesetzt werden.

9. Additionsverbindung nach einem der vorhergehenden Ansprüche, **dadurch gekennzeichnet, dass** in einem weiteren Schritt gegebenenfalls vorhandene terminale Epoxidgruppen mit sekundären Aminen oder Säuren umgesetzt werden.

10. Additionsverbindung nach einem der vorhergehenden Ansprüche, **dadurch gekennzeichnet, dass** in einem weiteren Schritt gegebenenfalls verbliebene Hydroxylfunktionen mit Hydroxycarbonsäuren und/oder cyclischen Lactonen umgesetzt werden.

11. Additionsverbindung nach einem der vorhergehenden Ansprüche, **dadurch gekennzeichnet, dass** in einem weiteren Schritt gegebenenfalls verbliebene Hydroxylfunktionen mit anderen als den unter C aufgeführten Isocyanaten umgesetzt werden.

12. Additionsverbindung nach einem der vorhergehenden Ansprüche, **dadurch gekennzeichnet, dass** in einem weiteren Schritt gegebenenfalls verbliebene Hydroxylfunktionen mit Phosphorsäure oder Polyphosphorsäure und/oder sauren Phosphorsäureestem und/oder Carbonsäuren umgesetzt werden.

13. Additionsverbindung nach einem der vorhergehenden Ansprüche, **dadurch gekennzeichnet, dass** in einem weiteren Schritt eine Alkylierung oder eine Oxidation der gegebenenfalls verbliebenen Aminogruppen unter Ausbildung von quaternären Ammoniumsalzen oder Stickstoffoxiden vorgenommen wird.

14. Verfahren zur Herstellung einer als Netz- und Dispergiermittel geeigneten Additionsverbindung durch Umsetzung von
A) Polyepoxiden mit
B) mindestens einem aliphatischen und/oder araliphatischen primären Aminen der allgemeinen Formel I
H₂N-R I
wobei R = Alkyl, Cycloalkyl, Aryl und Aralkyl bedeutet und wobei das primäre Amin noch weitere funktionelle Gruppen ausgewählt aus -OH, tertiäres Amin oder Carboxyl tragen kann und nachfolgende Addition
C) mindestens eines modifizierten Isocyanats der allgemeinen Formel IIa und/oder IIb 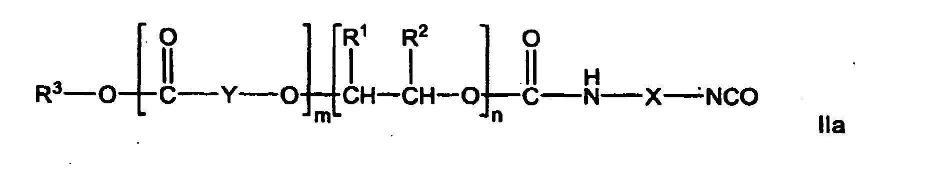 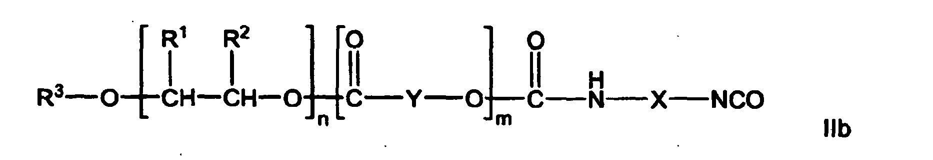
wobei R³ = Alkyl, Cycloalkyl, Aryl oder Aralkyl ist, R¹ und R² unabhängig voneinander H, Alkyl und/oder Aryl sind, X = Alkylen, Cycloalkylen und/oder Aralkylen, Y = Alkylen und/oder Cycloalkylen und n und m unabhängig voneinander sind, wobei die Summe n+m ≥ 2 ist, unter Bildung eines Urethans.

15. Verfahren zur Herstellung einer Additionsverbindung nach Anspruch 14, **dadurch gekennzeichnet, dass** das Isocyanat C ein Polyalkylenoxid-modifiziertes Isocyanat der Formel IIc 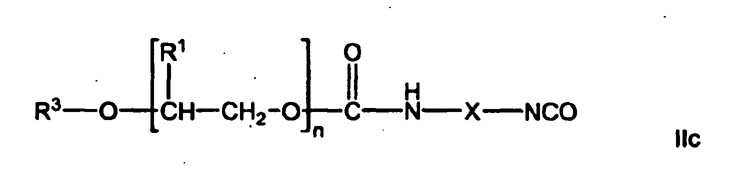 ist, wobei R³ = Alkyl, Cycloalkyl, Aryl oder Aralkyl ist, R¹ = H, Methyl und/oder Ethyl ist, X = Alkylen, Cycloalkylen und/oder Aralkylen und n= 2 bis 100 ist.

16. Verfahren zur Herstellung einer Additionsverbindung nach Anspruch 14 oder 15, **dadurch gekennzeichnet, dass** mindestens ein weiteres primäres Amin D der allgemeinen Formel III
H₂N-R'-Z III
wobei R' = Alkylen bedeutet und Z ein heterocyclischer Rest ist, eingesetzt wird.

17. Verfahren zur Herstellung einer Additionsverbindung nach einem der Ansprüche 14 bis 16, **dadurch gekennzeichnet, dass** als Komponente A Diepoxide der allgemeinen Formel IV 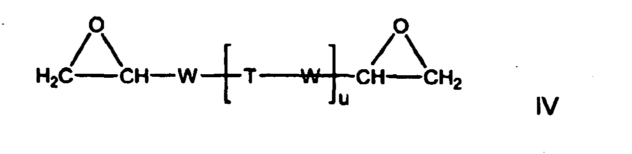 mit W = -CH3-O- oder -CH₂-, T = Alkyl, Cycloalkyl, Aryl oder Aralkyl und u = 1-8 eingesetzt werden.

18. Verfahren nach einem der Ansprüche 14 oder 17 **dadurch gekennzeichnet, dass** die Komponenten A und B in einem molaren Verhältnis von 2:3 bis 3:2 eingesetzt werden.

19. Verfahren nach einem der Ansprüche 14 oder 17 **dadurch gekennzeichnet, dass** die Komponenten A, B und D in einem molaren Verhältnis von 2:3 bis 3:2 eingesetzt werden.

20. Verfahren nach einem der Ansprüche 14 bis 19, **dadurch gekennzeichnet, dass** in der Additionsreaktion Komponente C in einer Menge eingesetzt wird, dass 5-100%, bevorzugt 20-100% und besonders bevorzugt 40-100%, der durch die Addition der Komponenten A und B erzeugten OH-Gruppen unter Urethanbildung umgesetzt werden.

21. Verfahren nach einem der Ansprüche 14 bis 19, **dadurch gekennzeichnet, dass** in der Additionsreaktion Komponente C in einer Menge eingesetzt wird, dass 5-100%, bevorzugt 20-100% und besonders bevorzugt 40-100%, der durch die Addition der Komponenten A, B und D erzeugten OH-Gruppen unter Urethanbildung umgesetzt werden.

22. Verwendung einer Additionsverbindung nach einem der Ansprüche 1 bis 13 als Netz- und/oder Dispergiermittel für organische und/oder anorganische Pigmente oder Füllstoffe.

23. Pulver- oder faserförmige Feststoffe, die mit Additionsverbindungen nach einem der Ansprüche 1 bis 13 beschichtet sind.

## Claims

1. Addition compound suitable as a wetting and dispersing agent and obtainable from the reaction of
A) polyepoxides with
B) at least one aliphatic and/or araliphatic primary amine of the general formula I
H₂N-R I
where R is alkyl, cycloalkyl, aryl and aralkyl, and where the primary amine may also carry further functional groups selected from -OH, tertiary amine or carboxyl, and subsequent addition reaction of
C) at least one modified isocyanate of the general formula IIa and/or IIb 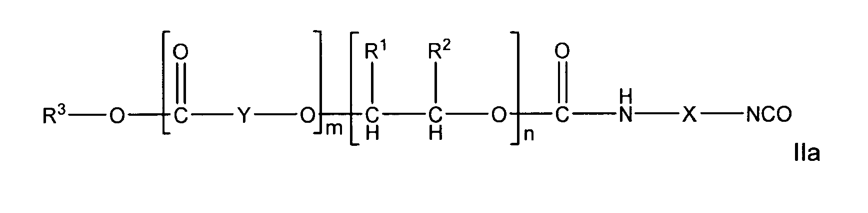 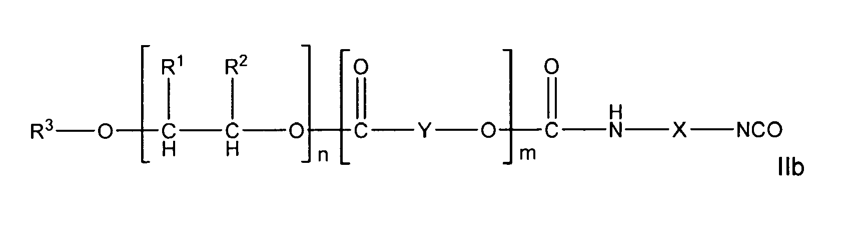
where R³ is alkyl, cycloalkyl, aryl and/or aralkyl, R¹ and R² independently of one another are H, alkyl or aryl, X is alkylene, cycloalkylene and/or aralkylene, Y is alkylene and/or cycloalkylene and n and m are independent of one another, the sum n+m being ≥ 2, to form a urethane.

2. Addition compound according to Claim 1, **characterized in that** the isocyanate C is a polyalkyleneoxide modified isocyanate of the formula IIc 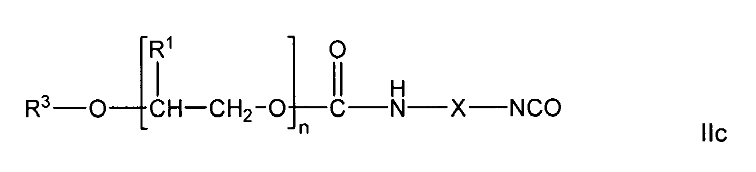 where R³ is alkyl, cycloalkyl, aryl or aralkyl, R¹ is H, methyl and/or ethyl, X is alkylene, cycloalkylene and/or aralkylene and n is 2 to 100.

3. Addition compound according to any one of the preceding claims, **characterized in that** at least one further primary amine D is used, of the general formula III
H₂N-R'-Z III
where R' is alkylene and Z is a heterocyclic radical.

4. Addition compound according to any one of the preceding claims, **characterized in that** component A are diepoxides of the general formula IV 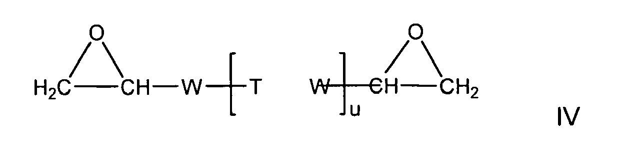 with W = -CH₂-O- or -CH₂-, T = alkyl, cycloalkyl, aryl or aralkyl, and u = 1-8.

5. Addition compound according to Claim 4, **characterized in that** the diepoxides are aromatic-containing diepoxide compounds having on average two epoxy functions per molecule.

6. Addition compound according to Claim 5, **characterized in that** the diepoxide compounds are diglycidyl ethers of difunctional phenol derivatives.

7. Addition compound according to Claim 4, **characterized in that** the diepoxides are aliphatic and/or cycloaliphatic diepoxide compounds having on average two epoxy functions per molecule.

8. Addition compound according to any one of the preceding claims, **characterized in that**, in a further step, any terminal amino groups present are reacted with isocyanates, lactones, cyclic carbonates or acrylates.

9. Addition compound according to any one of the preceding claims, **characterized in that**, in a further step, any terminal epoxide groups present are reacted with secondary amines, or acids.

10. Addition compound according to any one of the preceding claims, **characterized in that**, in a further step, any remaining hydroxyl functions are reacted with hydroxycarboxylic acids and/or cyclic lactones.

11. Addition compound according to any one of the preceding claims, **characterized in that**, in a further step, any remaining hydroxyl functions are reacted with isocyanates other than those listed under C.

12. Addition compound according to any one of the preceding claims, **characterized in that**, in a further step, any remaining hydroxyl functions are reacted with phosphoric acid or polyphosphoric acid and/or acidic phosphoric esters and/or carboxylic acids.

13. Addition compound according to any one of the preceding claims, **characterized in that**, in a further step, an alkylation or an oxidation is performed on the amino groups remaining where appropriate, to form quaternary ammonium salts or nitrogen oxides.

14. Process for preparing an addition compound suitable as a wetting and dispersing agent by reaction of
A) polyepoxides with
B) at least one aliphatic and/or araliphatic primary amine of the general formula I
H₂N-R I
where R is alkyl, cycloalkyl, aryl and aralkyl, and where the primary amine may also carry further functional groups selected from -OH, tertiary amine or carboxyl, and subsequent addition reaction of
C) at least one modified isocyanate of the general formula IIa and/or IIb 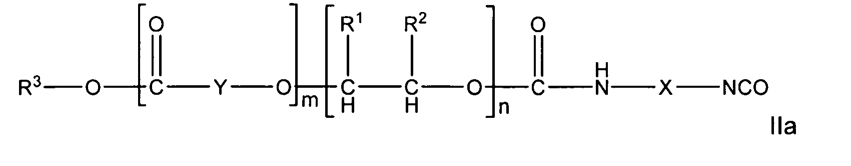 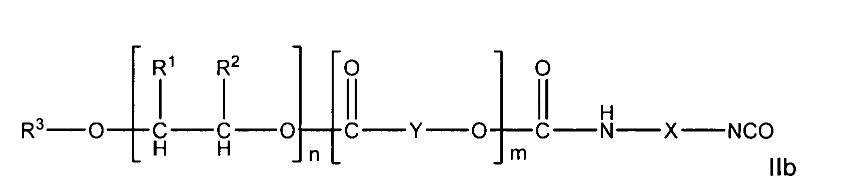
where R³ is alkyl, cycloalkyl, aryl or aralkyl, R¹ and R² independently of one another are H, alkyl and/or aryl, X is alkylene, cycloalkylene and/or aralkylene, Y is alkylene and/or cycloalkylene and n and m are independent of one another, the sum n+m being ≥ 2, to form a urethane.

15. Process for preparing an addition compound according to Claim 14, **characterized in that** the isocyanate C is a polyalkyleneoxide modified isocyanate of the formula IIc 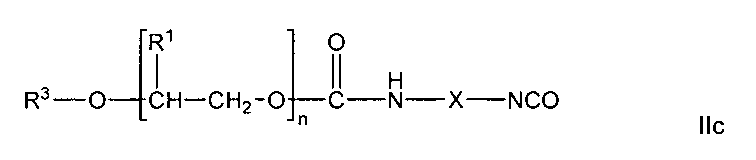 where R³ is alkyl, cycloalkyl, aryl or aralkyl, R¹ is H, methyl and/or ethyl, X is alkylene, cycloalkylene and/or aralkylene and n is 2 to 100.

16. Process for preparing an addition compound according to Claim 14 or 15, **characterized in that** at least one further primary amine D is used, of the general formula III
H₂N-R'-Z III
where R' is alkylene and Z is a heterocyclic radical.

17. Process for preparing an addition compound according to any one of Claims 14 to 16, **characterized in that** use is made as component A of diepoxides of the general formula IV 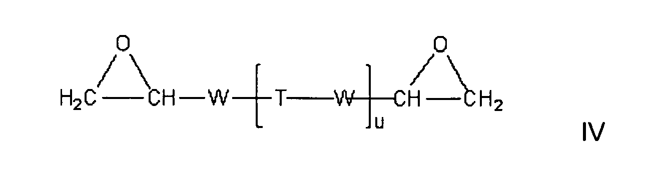 with W = -CH₂-O- or -CH₂-, T = alkyl, cycloalkyl, aryl or aralkyl, and u = 1-8.

18. Process according to either of Claims 14 and 17, **characterized in that** components A and B are used in a molar ratio of 2:3 to 3:2.

19. Process according to either of Claims 14 and 17, **characterized in that** components A, B and D are used in a molar ratio of 2:3 to 3:2.

20. Process according to any one of Claims 14 to 19 **characterized in that**, in the addition reaction, component C is used in an amount such that 5-100%, preferably 20-100% and with particular preference 40-100% of the OH groups generated by the addition reaction of components A and B are reacted with formation of urethane.

21. Process according to any one of Claims 14 to 19, **characterized in that**, in the addition reaction, component C is used in an amount such that 5-100%, preferably 20-100% and with particular preference 40-100% of the OH groups generated by the addition reaction of components A, B and D are reacted with formation of urethane.

22. Use of an addition compound according to any one of Claims 1 to 13 as a wetting and/or dispersing agent for organic and/or inorganic pigments or fillers.

23. Solids in powder or fibre form which have been coated with addition compounds according to any one of Claims 1 to 13.

## Revendications

1. Composé d'addition utilisable comme agent réticulant et dispersant, pouvant être obtenu en faisant réagir
A) des polyépoxydes avec
B) au moins une amine primaire aliphatique et/ou araliphatique répondant à la formule générale I
H₂N-R I
dans laquelle R signifie alkyle, cycloalkyle, aryle et aralkyle, l'amine primaire pouvant être pourvue d'autres groupements fonctionnels choisis parmi -OH, amine tertiaire ou carboxyle, puis en réalisant une addition
C) d'au moins un isocyanate modifié répondant aux formules générales IIa et/ou IIb 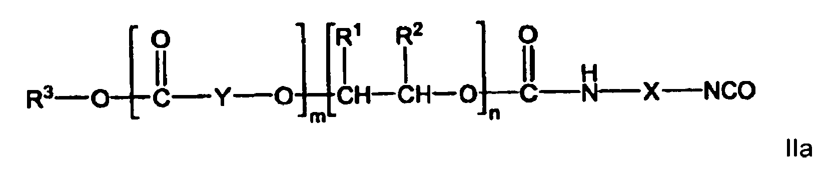 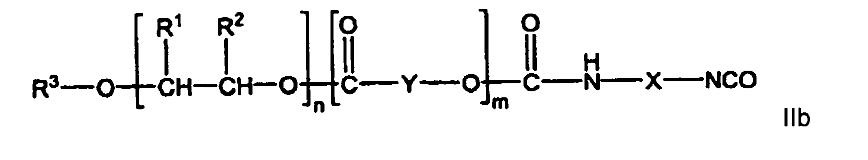
dans lesquelles R³ = alkyle, cycloalkyle, aryle et/ou aralkyle, R¹ et R² sont indépendamment l'un de l'autre H, alkyle ou aryle, X = alkylène, cycloalkylène et/ou aralkylène, Y = alkylène et/ou cycloalkylène, n et m étant indépendants l'un de l'autre et la somme n + m étant ≥ 2, pour ainsi former un uréthane.

2. Composé d'addition selon la revendication 1, **caractérisé en ce que** l'isocyanate C est un isocyanate modifié avec du polyalkylène-oxyde et répondant à la formule IIc 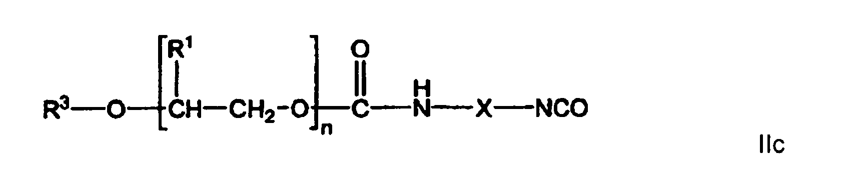 dans laquelle R³ = alkyle, cycloalkyle, aryle ou aralkyle, R¹ = H, méthyle et/ou éthyle, X = alkylène, cycloalkylène et/ou aralkylène et n est compris entre 2 et 100.

3. Composé d'addition selon l'une des revendications précédentes, **caractérisé en ce que** l'on met en oeuvre au moins une autre amine primaire D répondant à la formule générale III
H₂N-R'-Z III
dans laquelle R' signifie alkylène et Z est un radical hétérocyclique.

4. Composé d'addition selon l'une des revendications précédentes, **caractérisé en ce que** le composant A est constitué de diépoxydes répondant à la formule générale IV 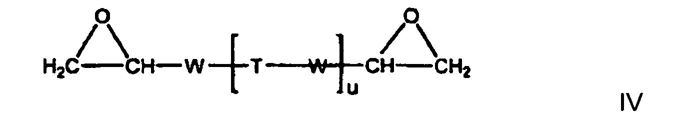 dans laquelle W = -CH₂-O- ou -CH₂-, T = alkyle, cycloalkyle, aryle ou aralkyle et u = 1 à 8.

5. Composé d'addition selon la revendication 4, **caractérisé en ce que** les diépoxydes sont des composés de type diépoxyde contenant des groupements benzéniques, une molécule étant en moyenne pourvue de deux fonctions époxy.

6. Composé d'addition selon la revendication 5, **caractérisé en ce que** les composés de type diépoxyde sont des éthers diglycidyliques de dérivés de phénol bifonctionnels.

7. Composé d'addition selon la revendication 4, **caractérisé en ce que** les diépoxydes sont des composés de type diépoxyde aliphatiques et/ou cycloaliphatiques, une molécule étant en moyenne pourvue de deux fonctions époxy.

8. Composé d'addition selon l'une des revendications précédentes, **caractérisé en ce que**, dans une étape supplémentaire, on fait réagir, le cas échéant, d'éventuels groupements aminés terminaux avec des isocyanates, des lactones, des carbonates cycliques ou des acrylates.

9. Composé d'addition selon l'une des revendications précédentes, **caractérisé en ce que**, dans une étape supplémentaire, on fait réagir, le cas échéant, d'éventuels groupements époxy terminaux avec des amines secondaires ou des acides.

10. Composé d'addition selon l'une des revendications précédentes, **caractérisé en ce que**, dans une étape supplémentaire, on fait réagir, le cas échéant, des fonctions hydroxyle restantes avec des acides carboxyliques hydroxylés et/ou avec des lactones cycliques.

11. Composé d'addition selon l'une des revendications précédentes, **caractérisé en ce que**, dans une étape supplémentaire, on fait réagir, le cas échéant, des fonctions hydroxyle restantes avec des isocyanates autres que ceux mentionnés sous C.

12. Composé d'addition selon l'une des revendications précédentes, **caractérisé en ce que**, dans une étape supplémentaire, on fait réagir, le cas échéant, des fonctions hydroxyle restantes avec de l'acide phosphorique ou de l'acide polyphosphorique et/ou des esters acides d'acide phosphorique et/ou des acides carboxyliques.

13. Composé d'addition selon l'une des revendications précédentes, **caractérisé en ce que**, dans une étape supplémentaire, on réalise, le cas échéant, une alkylation ou une oxydation des groupements aminés restants, menant à la formation de sels d'ammonium quaternaires ou d'oxydes d'azote.

14. Procédé de préparation d'un composé d'addition utilisable comme agent réticulant et dispersant, en faisant réagir
A) des polyépoxydes avec
B) au moins une amine primaire aliphatique et/ou araliphatique répondant à la formule générale I
H₂N-R I
dans laquelle R signifie alkyle, cycloalkyle, aryle et aralkyle, l'amine primaire pouvant être pourvue d'autres groupements fonctionnels choisis parmi -OH, amine tertiaire ou carboxyle, puis en réalisant une addition
C) d'au moins un isocyanate modifié répondant aux formules générales IIa et/ou IIb 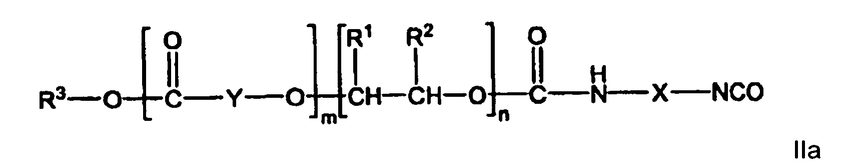 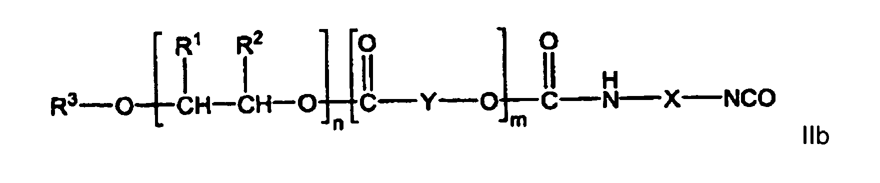
dans lesquelles R³ = alkyle, cycloalkyle, aryle ou aralkyle, R¹ et R² sont indépendamment l'un de l'autre H, alkyle et/ou aryle, X = alkylène, cycloalkylène et/ou aralkylène, Y = alkylène et/ou cycloalkylène, n et m étant indépendants l'un de l'autre et la somme n + m étant ≥ 2, pour ainsi former un uréthane.

15. Procédé de préparation d'un composé d'addition selon la revendication 14, **caractérisé en ce que** l'isocyanate C est un isocyanate modifié avec du polyalkylène-oxyde et répondant à la formule IIc 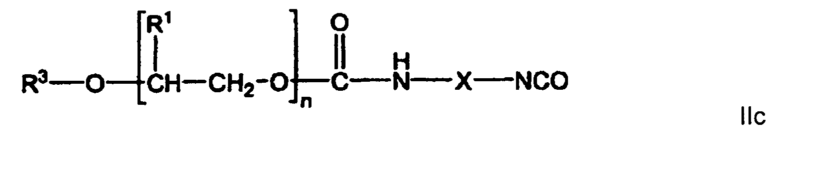 dans laquelle R³ = alkyle, cycloalkyle, aryle ou aralkyle, R¹ = H, méthyle et/ou éthyle, X = alkylène, cycloalkylène et/ou aralkylène et n est compris entre 2 et 100.

16. Procédé de préparation d'un composé d'addition selon les revendications 14 ou 15, **caractérisé en ce que** l'on met en oeuvre au moins une autre amine primaire D répondant à la formule générale III
H₂N-R'-Z III
dans laquelle R' signifie alkylène et Z est un radical hétérocyclique.

17. Procédé de préparation d'un composé d'addition selon l'une des revendications 14 à 16, **caractérisé en ce que** l'on met en oeuvre, en tant que composant A, des diépoxydes répondant à la formule générale IV 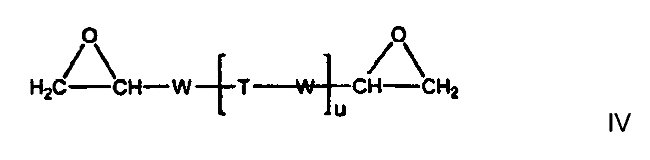 dans laquelle W = -CH₂-O- ou -CH₂-, T = alkyle, cycloalkyle, aryle ou aralkyle et u = 1 à 8.

18. Procédé selon l'une des revendications 14 ou 17, **caractérisé en ce que** les composants A et B sont mis en oeuvre selon un rapport molaire compris entre 2:3 et 3:2.

19. Procédé selon l'une des revendications 14 ou 17, **caractérisé en ce que** les composants A, B et D sont mis en oeuvre selon un rapport molaire compris entre 2:3 et 3:2.

20. Procédé selon l'une des revendications 14 à 19, **caractérisé en ce que**, pour la réaction d'addition, le composant C est mis en oeuvre dans une quantité telle que 5 à 100 %, de préférence 20 à 100 % et, avec une préférence particulière, 40 à 100 % des groupements OH générés par l'addition des composants A et B réagissent en formant de l'uréthane.

21. Procédé selon l'une des revendications 14 à 19, **caractérisé en ce que**, pour la réaction d'addition, le composant C est mis en oeuvre dans une quantité telle que 5 à 100 %, de préférence 20 à 100 % et, avec une préférence particulière, 40 à 100 % des groupements OH générés par l'addition des composants A, B et D réagissent en formant de l'uréthane.

22. Utilisation d'un composé d'addition selon l'une des revendications 1 à 13 comme agent réticulant et/ou dispersant destiné à des pigments ou charges organiques et/ou inorganiques.

23. Matières solides sous forme de poudres ou de fibres, revêtues de composés d'addition selon l'une des revendications 1 à 13.
